# EUROPÄISCHE PATENTSCHRIFT

(11) **EP 2 561 590 B1**
(45) Veröffentlichungstag und Bekanntmachung des Hinweises auf die Patenterteilung: **29.06.2016**
(21) Anmeldenummer: 11714772.8
(22) Anmeldetag: 15.04.2011
(51) Int. Cl.: H02B 7/08, H02B 3/00

(54) **UNTERIRDISCHES TRANSFORMATOR UMSPANNSTATION FÜR HOCH- UND MITTELSPANNUNG**
SUBTERRANEAN HIGH/MEDIUM VOLTAGE TRANSFORMER STATION
STATION DE TRANSFORMATION SOUTERRAIN À HAUTE/MOYENNE TENSION

(30) Priorität: 17.05.2010 DE 102010020719; 21.04.2010 DE 102010017899
(43) Veröffentlichungstag der Anmeldung: 27.02.2013
(73) Patentinhaber: ABB Technology AG, 8050 Zürich (CH)
(72) Erfinder: KÄMPFER, Stefan, 68305 Mannheim (DE); KAUFMANN, Klaus, 68259 Mannheim (DE); BORNHOFFER, Richard, 68259 Mannheim (DE); KRAFT, Karlheinz, 68723 Plankstadt (DE); KOMISCHKE, Patrick, Cary, NC 27519 (US); GHOSH, Saikat, 63128 Dietzenbach (DE); SCHNEIDER, Jens-Olaf, 4067, St Lucia, Queensland (AU)
(74) Vertreter: Kock, Ina
(86) Internationale Anmeldenummer: PCT/EP2011/056009
(87) Internationale Veröffentlichungsnummer: WO 2011/131580

(56) Entgegenhaltungen:
- EP-A1- 1 435 681
- CN-Y- 201 230 147
- DE-U- 1 964 787
- US-A- 1 986 619
- BERT STRASSBURGER ET AL: "Modern Subterranean Substations in GIS Technology - Challenges and Opportunities in Managing Demographic Change and Infrastructure Requirements", POWER-GEN MIDDLE EAST 2009, 11. November 2008 (2008-11-11), Seiten 1-15, XP55017806, Manama, Kingdom of Bahrain
- Abb Ag: "Substations that can hide in a city Underground solution concepts", , 1. Februar 2011 (2011-02-01), XP55017808, Mannheim, Germany Gefunden im Internet: URL:http://www05.abb.com/global/scot/scot2 21.nsf/veritydisplay/adf28ca1fbe93959c1257 8b0002efb32/$file/ugss-e2_final.pdf [gefunden am 2012-01-27]

## Beschreibung

Die Erfindung betrifft Schaltanlagen- bzw. Umspannstationen für Hoch- und Mittelspannungen, welche unterirdisch installiert sind und Leistungstransformatoren zur Umsetzung von Hochspannung auf Mittelspannung sowie eine Mittelspannungsschaltanlage umfassen. In einer besonderen Ausgestaltung ist auch eine Hochspannungsschaltanlage als Teil der Umspannstation vorgesehen, welche vorzugsweise als gasisolierte Schaltanlage ausgeführt ist.

Eine zumindest teilweise unterirdische Installation von Schaltanlagen, insbesondere gasisolierten Schaltanlagen, ist beispielsweise aus der DE 4210901A1 bekannt. Die dort beschriebene als Kompaktstation ausgeführte Schaltanlage ist in einer Stahlbetonraumzelle integriert, die teilweise in das Erdreich abgesenkt ist und entsprechende Belüftungsmöglichkeiten an der Oberseite der Raumzelle zur Verbindung zwischen ihrem Innenraum und der Atmosphäre aufweist.

Aus der DE 2915504A1 ist eine Raumzelle mit einem abgegossenem Fundament für eine begehbare explosionsgefährdete elektrische Netzstation mit einem Transformator und einer störbogensicheren Schaltanlage bekannt, die auf einem Zwischenboden angeordnet ist, wobei zwischen dem Zwischenboden und dem Fundament ein unter den Transformator führender und über einen Luftschacht mit der Außenluft in Verbindung stehender Belüftungskanal vorgesehen ist. Zwischen dem Zwischenboden und dem Fundament, also oberhalb und unterhalb der Schaltanlage, ist weiterhin ein Expansionsraum vorgesehen, dessen Begrenzungswände Druckentlastungsöffnungen aufweisen und die mit dem Belüftungskanal und/oder einer Abluftöffnung in Dach oder im Oberteil einer Seitenwand der Raumzelle in Verbindung stehen.

Auch in der Druckschrift DE 298 04 893 U1 ist eine Transformatorenstation für Mittel- und Niederspannungen beschrieben, in deren Gehäuse ein Transformator sowie ein Mittel- und ein Niederspannungsteil angeordnet sind. Die Transformatorenstation weist weiterhin eine Transportöffnung im Dach des Gehäuses auf, die eine Installation der Geräte der Transformatorenstation und deren Revision erleichtert.

Um den Zugang sowie den Transport und die Wartungsarbeiten an den Leistungstransformatoren von Umspannstationen günstig zu gestalten, werden die Leistungstransformatoren meist ebenerdig angeordnet.

Werden die Leistungstransformatoren jedoch unterirdisch angeordnet, ist üblicherweise für jeden Transformator ein eigener Zugang vorgesehen, der nicht überbaut ist, um einen dauerhaften Zugang zum Transformator zu ermöglichen. Für die Funktionsfähigkeit der Schaltanlagen- bzw. Umspannstationen müssen weiterhin separate Einrichtungen für die Ventilation und Klimatisierung vorgesehen sein.

Bei einer Anordnung der Transformatoren durch eine teilweise oder komplette Absenkung ins Erdreich können diese auch lediglich mit Schutzgittern oder ähnlichen Einrichtungen überdacht sein, um einerseits eine mechanische Schutzfunktion zu erfüllen, andererseits aber eine Luftströmung zur Kühlung zu ermöglichen.

Die vorab beschriebenen bisherigen Ausführungen der Schaltanlagen- bzw. Umspannstationen beziehen sich im Wesentlichen auf Kompaktstationen, jedoch nicht auf größere Umspannstationen. Weiterhin bieten die beschriebenen Konzepte nicht die Möglichkeit der kompletten Überbauung, da ein Zugang zum Leistungstransformator gewährleistet sein muss bzw. der oberirdische Platzbedarf der Schaltanlagen bzw. Umspannstationen durch vorgesehene eigene Zugänge zum jeweiligen Leistungstransformator sehr groß ist. Zusätzlich muss für die erforderlichen Lüftungsschächte ein genügend großer Raumbedarf vorgesehen sein.

Ziel der vorgestellten unterirdischen Station ist, die Öffnungen bzw. den oberirdischen Platzbedarf zu minimieren. Weiterhin soll eine Überbauung sowie die Einbindung in öffentliche Räume ermöglicht werden.

Werden Transformatoren lediglich ins Erdreich abgesenkt, bestehen hier erhebliche Sicherheitsrisiken für die Umgebung. Das vorgestellte Konzept vermeidet weitgehend Sicherheitsrisiken für z.B. angrenzende öffentliche Räume durch eine bauliche Abtrennung. Es ermöglicht zudem eine komplette optische Integration in eine städtische Umgebung und minimiert den Einfluss der Anlage auf die Umgebung. Es ist daher Aufgabe der vorliegenden Erfindung, eine Schaltanlagen- bzw. Umspannstation, insbesondere mit allen nötigen Hilfs- und Neben- sowie Schutz- und Steuerungseinrichtungen, anzugeben, welche die vorgenannten Nachteile vermeidet und insbesondere den oberirdischen Raumbedarf der Station reduziert, sowie die durch oberirdisch angeordnete Transformatoren der Station bestehenden erheblichen Sicherheitsrisiken für die Umgebung vermeidet.

DE 19 64 787 U und EP 14 35 681 A offenbaren jeder ein unterirdisches Umspannstation gemass dem Oberbegriff des Anspruchs 1.

Die Aufgabe der Erfindung wird durch eine Schaltanlagen- bzw. Umspannstation für Hoch- und Mittelspannungen, der eingangs genannten Art mit den im Anspruch 1 angegebenen Merkmalen gelöst. Vorteilhafte Ausgestaltungen und Verbesserungen der erfindungsgemäßen Schaltanlagen- bzw. Umspannstation sowie der Einsatz einer Hochspannungsschaltanlage als Teil der Umspannstation sind in weiteren Ansprüchen und in der Beschreibung angegeben.

Die Erfindung betrifft eine Schaltanlagen- bzw. Umspannstation, welche unterirdisch installiert ist und Leistungstransformatoren zur Umsetzung von Hochspannung auf Mittelspannung sowie eine Mittelspannungsschaltanlage umfasst. In einer besonderen Ausgestaltung ist auch eine Hochspannungsschaltanlage als Teil der Umspannstation vorgesehen. Die in der Umspannstation eingesetzten Schaltanlagen können als luft- oder gasisolierte Schaltanlagen ausgeführt sein.

Die erfindungsgemäße Umspannstation ist mit allen nötigen Hilfs- und Neben- sowie Schutz- und Steuerungseinrichtungen ausgestattet, die weitestgehend oder komplett unterirdisch installiert ist, wobei nur die Zugänge zur Schaltanlage und die Lüftungsschächte oberirdisch angeordnet sind, und die die folgenden Merkmale aufweist.

Für den Zugang zur Schaltanlage ist ein gemeinsamer Zugangs- bzw. Transportschacht vorgesehen, der geeignet ist alle großen Gerätschaften und Betriebsmittel, insbesondere Leistungs- und Hilfstransformatoren, Hochspannungsschaltanlage und Mittelspannungsschaltanlage sowie Kühl- und Klimageräte, in die Station zu transportieren. Zusätzlich ist der Zugangs- bzw. Transportschacht während des Betriebes der Station als Abluftschacht nutzbar. Hierzu weist der Schacht entsprechende Lüftungskanäle auf, die einerseits eine vorteilhafte Luftführung gewährleisten sowie andererseits den baulichen Abschluss des Schachtes darstellen. Der Zugangs- bzw. Transportschacht ist in vorteilhafter Weise mit einem Verschlusselement ausgestattet, welches bei Bedarf, beispielsweise zum Austausch großer Betriebsmittel bei einer Revision der Schaltanlage, demontierbar ist, um so einen einfachen Zugang zu den Betriebsmitteln zu gewährleisten.

Für kleinere Gerätschaften, beispielsweise für Wartungs-, Revisions-, oder Testzwecke, kann im Verschluss des Schachtes eine Öffnung, beispielsweise mit einer Klappe, vorgesehen werden. Diese Öffnung kann ebenfalls zum Zwecke des Ölaustauschs bzw. der Ölaufbereitung der Transformatoren genutzt werden.

Unterhalb des Zugangsschachtes befindet sich eine Bodenfläche, die zum Absetzen der Betriebsmittel, insbesondere der Leistungstransformatoren, nach dem Einbringen durch den Schacht vorgesehen ist. Nach dem Absetzen der Transformatoren sind diese in dafür vorgesehene, vorzugsweise angrenzende, Boxen verbringbar. Dies hat den Vorteil, dass der Platzbedarf für den Transport der Transformatoren minimiert wird und nur eine gemeinsame Transportöffnung vorgesehen werden muss. Weiterhin ist die Anordnung der Boxen so gestaltet, dass ein direkter Zugang zu jedem einzelnen Transformator gewährleistet ist. Die Bodenfläche zum Absetzen der Betriebsmittel ist auch für Montage- und Wartungsarbeiten innerhalb der Station nutzbar.

In einer vorteilhaften Ausgestaltung der Erfindung ist in der beschriebenen Bodenfläche eine bewegliche Plattform, nachfolgend auch als Hebeeinrichtung bezeichnet, integriert, die zum Heben und Senken der Betriebsmittel, insbesondere der Leistungstransformatoren verwendbar ist. Die Hebeeinrichtung kann auch zum Absetzen bzw. Einbringen von Material und/oder Betriebsmitteln in jeder vorgesehen Ebene genutzt werden. Dabei arbeitet die Hebeeinrichtung vorzugsweise hydraulisch, wobei das Heben und Senken der Einrichtung schrittweise oder kontinuierlich erfolgt.

Befindet sich die Schaltanlagenstation bzw. Umspannstation komplett unterirdisch und/oder ist die Station komplett überbaut, ist über dem gemeinsamen Transportschacht eine Halle oder ein in das überbaute Gebäude integrierter Großraum mit Zugang zu geeigneten Transportwegen vorgesehen, die das Einbringen der Leistungstransformatoren über den Zugang erlaubt. Mittels der beschriebenen Plattform erfolgt die Absenkung der Betriebsmittel, insbesondere der Leistungstransformatoren, in die Station. Im Betrieb der Station ist die Halle bzw. der Großraum als Teil der Überbauung, beispielsweise als öffentlicher Bereich, nutzbar. Der Austausch der in der Schaltanlage befindlichen Transformatoren sowie anderer Betriebsmittel und Gerätschaften, wie beispielsweise Schaltschränken, wird wiederum durch die Halle bzw. den Großraum und über den Transportschacht mittels der vorhandenen Transportplattform ausgeführt.

In einer weiteren Ausgestaltung der Erfindung sind in der Halle auch Ansatzpunkte bzw. Konstruktionen für Hebe- und Senkeinrichtungen, wie beispielsweise Flaschenzüge, vorgesehen.

Dadurch, dass sich der oberirdische Teil der Schaltanlagenstation bzw. Umspannstation lediglich auf einen gemeinsamen Zuluftschacht, die Zugänge bzw. Fluchtwege für Personen mittels Treppenhäusern und den beschriebenen kombinierten Transport- und Abluftschacht beschränkt, ist der oberirdische Platzbedarf der Station minimiert.

Der gemeinsame Zuluftschacht versorgt die komplette Station mit Frischluft. In vorteilhafter Weise kann der Zuluftschacht redundant ausgelegt sein, so dass während durchzuführender Wartungsarbeiten die Belüftung der Station unter Volllast in Betrieb bleibt. Auch ist vorgesehen, die in der Station benötigten Ventilatoren sowie Sandfilter und Dämpfungseinrichtungen innerhalb des Zuluftschachtes so anzuordnen, dass mittels vorgesehener Türen eine Wartung innerhalb der Station durchführbar ist.

Um Sicherheitsrisiken beim Betrieb der Schaltanlage zu minimieren, sind die Transformatoren in weitestgehend geschlossenen Boxen angeordnet. Der bauliche Verschluss der Boxen kann durch Fertigteilelemente erfolgen, die eine rasche Demontage im Falle eines notwendigen Austausches der Transformatoren ermöglichen und gleichzeitig die notwendigen Brandschutzanforderungen erfüllen. Weiterhin werden für die Transformatoren vorzusehende Kühler vom eigentlichen Transformatorentank abgesetzt und außerhalb der Transformatorbox angeordnet, was eine Minimierung der Lüftungsöffnungen der eigentlichen Transformatorbox erlaubt. Diese Anordnung ist, insbesondere sicherheitstechnisch, vorteilhaft, da das Gefahrenpotential des Transformators in einem definierten Volumen bzw. Brandabschnitt weitestgehend abgeschlossen ist bzw. ein automatisches Schließen der Lüftungsöffnungen im Brand- bzw. Havariefalle sichergestellt ist. Die Abtrennung innerhalb des Ölkreislaufes erfolgt mittels automatischer Ventile, die in Rohrleitungen des Ölkreislaufes eingebracht sind.

In einer weiteren vorteilhaften Ausgestaltung ist die jeweilige Transformatorbox mit einer automatischen Löscheinrichtung ausgestattet.

Die Kühler der Transformatoren werden in einem sogenannten Lüftungsbereich angeordnet. Hier werden ebenfalls benötigte Klimageräte u. ä. angeordnet. Mittels Zuluftkanälen wird die benötigte Zuluft vom gemeinsamen Zuluftschacht zu den Kühlern und den Klimageräten geführt. Diese Anordnung erlaubt eine zielgerichtete und vorteilhafte Beströmung und somit effiziente Kühlung der Transformatoren. Im Brand- bzw. Havariefall ist weiterhin vorgesehen, dass der betroffene Kühlerbereich mittels Brandschutztüren automatisch von der restlichen Station bzw. dem restlichen Kühlerbereich abtrennbar ist, so dass ein Weiterbetrieb der Station gewährleistet ist. Die vorab beschriebene Unterteilung in separate eigene Brandschutzabschnitte ermöglicht somit ein Höchstmaß an Verfügbarkeit der Station.

Um eine flexiblen Zuführung der Leistungskabel von außen in die Station zu erreichen, sind Kabelschächte, vorzugsweise an allen Ecken der Station, vorgesehen. Die Leistungskabel werden mittels der Kabelschächte über einen tiefer liegenden Kabelkeller den Schaltanlagen zugeführt.

Erfindungsgemäß können die Schaltanlagenräume auch eine Druckentlastungseinrichtung in der folgenden Ausgestaltung aufweisen.
- Bei einer vorgesehenen Druckentlastung in die Umgebung der Schaltanlage sind die Druckentlastungskanäle in einen Bereich geführt, in dem keine Personengefährdung zu befürchten ist.
- Bei einer vorgesehenen Druckentlastung innerhalb der Station sind die Druckentlastungskanäle in den Kabelkeller geführt und mit Absorbereinrichtungen ausgestattet.

Durch die vorab beschriebenen Ausgestaltungen der Druckentlastungseinrichtung gewährleistet diese auch bei einem begrenzten Raumvolumen die Sicherheit der Schaltanlage.

In einer besonderen Ausgestaltung der erfindungsgemäßen Station sind die Transformatoren als Trockentransformatoren ausgeführt, wodurch neben einer Minimierung der notwendigen Brandschutz- bzw. Sicherheitsmaßnahmen auch eine Einsparung der zu bebauenden Fläche der Schaltanlagenstation erreicht wird.

Durch die unterirdische Installation der Schaltanlagenstation sind nur noch Zugänge und Lüftungsschächte oberirdisch installiert, so dass insbesondere in dicht besiedelten Innenstädten der zur Verfügung stehende Platz minimiert wird und für eine weitere Verwendung, beispielsweise für eine Überbauung, zur Verfügung steht.

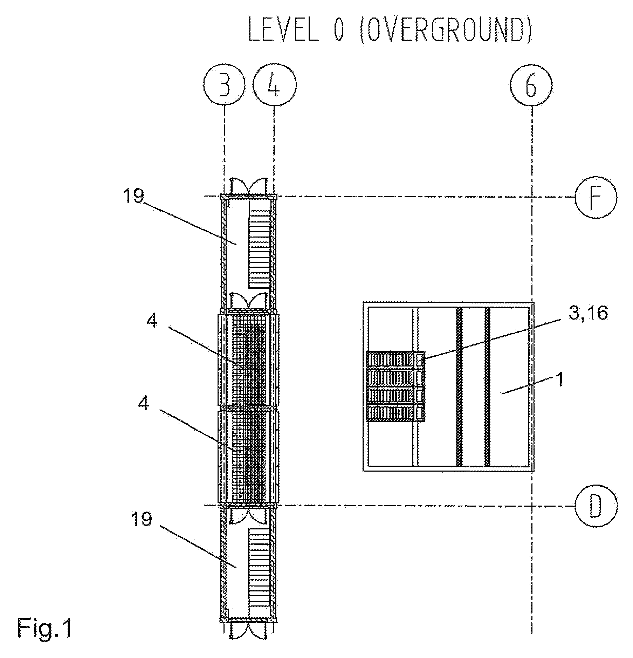

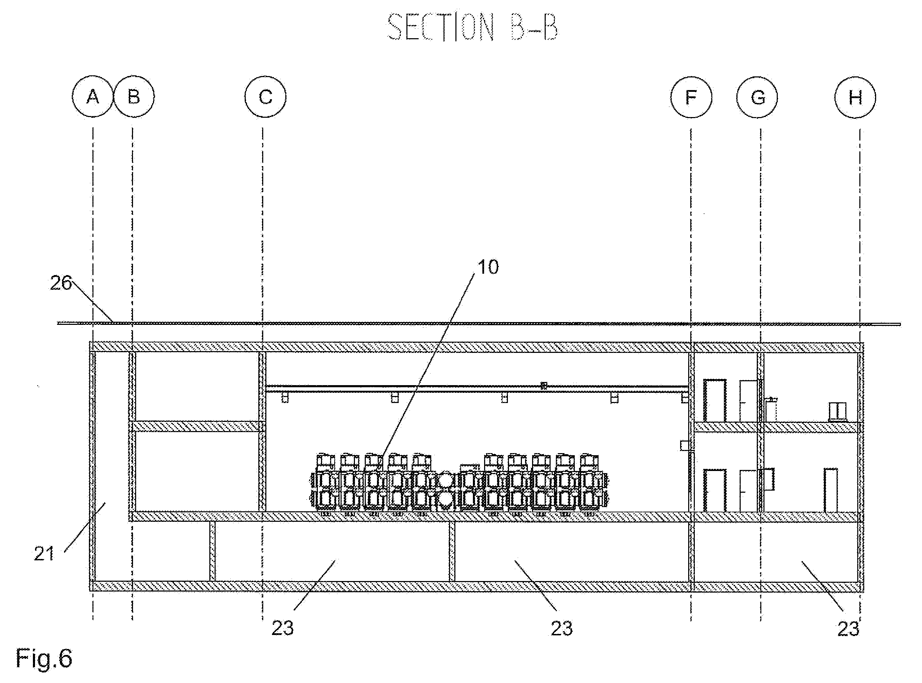

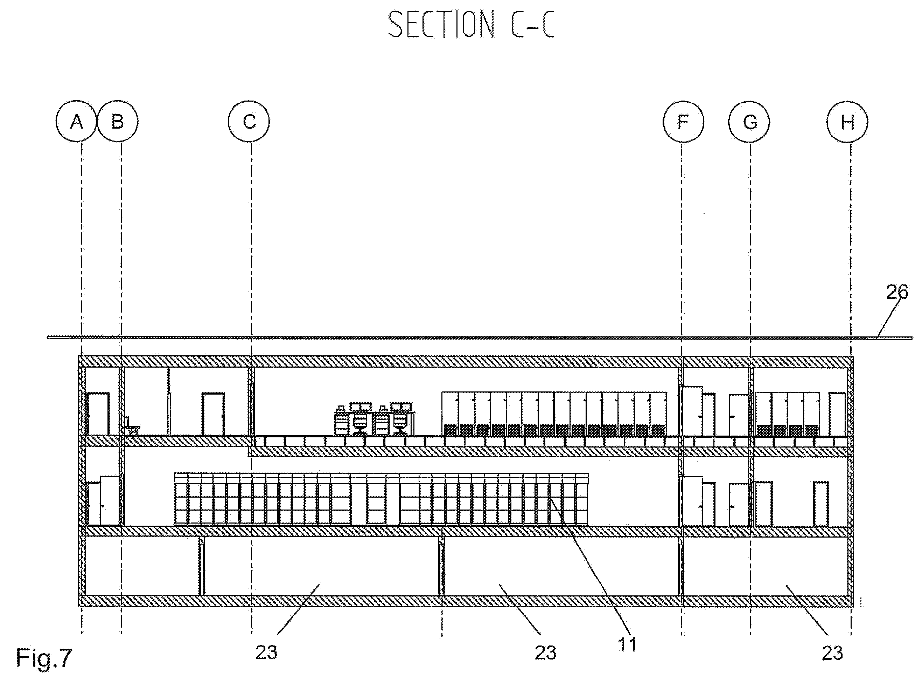

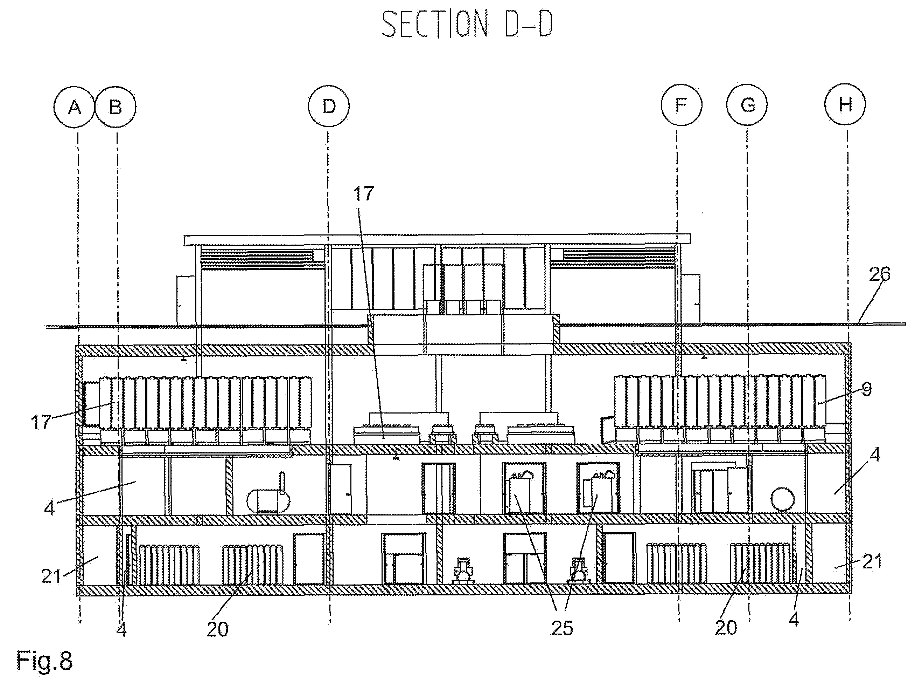

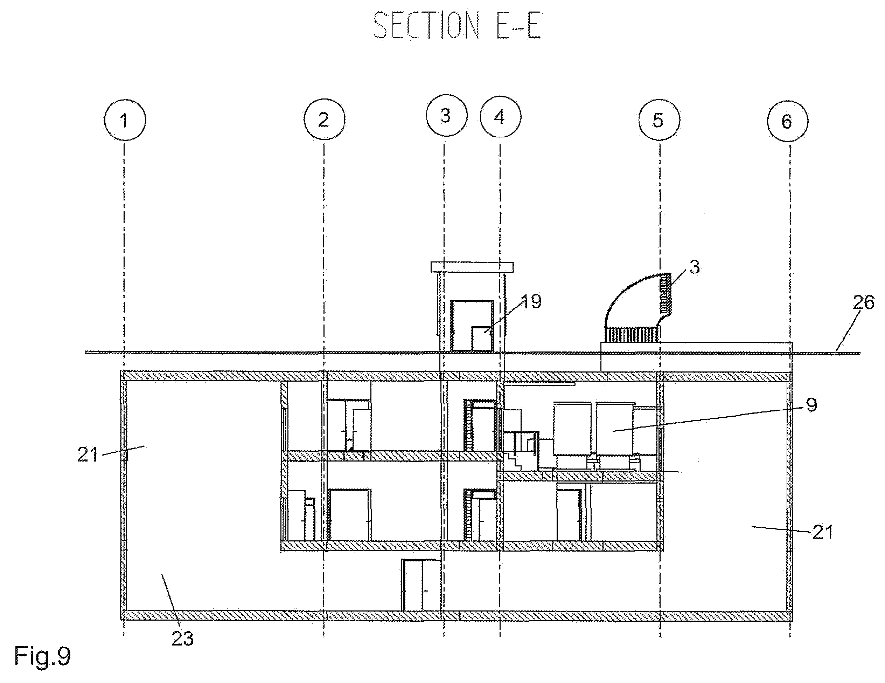

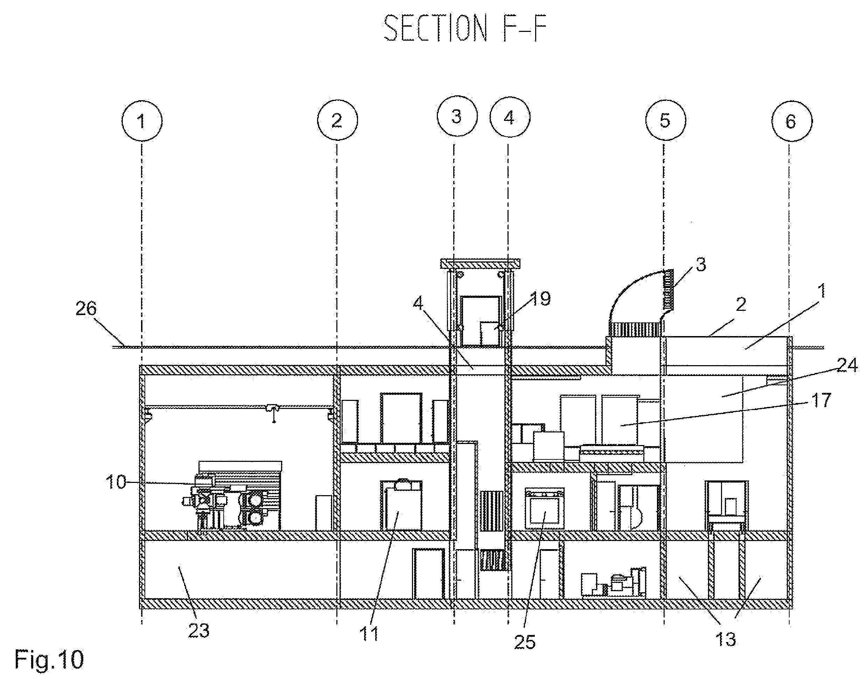

Anhand der in den folgenden Figuren dargestellten Ausführungsbeispiele sollen die Erfindung sowie vorteilhafte Ausgestaltungen und Verbesserungen der Erfindung näher erläutert und beschrieben werden. Dabei zeigen die Figuren 1 bis 10 eine beispielhafte Transformatoren- Umspannstation in verschiedenen Schnittdarstellungen.

Es zeigen:
- **Fig. 1**: einen beispielhaften Grundriss eines ersten oberirdisch angeordneten Teilbereiches der Umspannstation,
- **Fig. 2**: einen beispielhaften Grundriss eines ersten unterirdisch angeordneten Geschosses der Station,
- **Fig. 3**: einen beispielhaften Grundriss eines zweiten unterirdisch angeordneten Geschosses der Station,
- **Fig. 4**: einen beispielhaften Grundriss eines dritten unterirdisch angeordneten Geschosses der Station,
- **Fig. 5**: eine Schnittansicht durch die Umspannstation gemäß Schnittlinie A-A,
- **Fig. 6**: eine Schnittansicht durch die Umspannstation gemäß Schnittlinie B-B,
- **Fig. 7**: eine Schnittansicht durch die Umspannstation gemäß Schnittlinie C-C,
- **Fig. 8**: eine Schnittansicht durch die Umspannstation gemäß Schnittlinie D-D,
- **Fig. 9**: eine Schnittansicht durch die Umspannstation gemäß Schnittlinie E-E und,
- **Fig. 10**: eine Schnittansicht durch die Umspannstation gemäß Schnittlinie F-F.

In der **Figur 1** ist ein erster Teilbereich der Umspannstation dargestellt, welcher sich oberhalb der Geländekante 26 der Station befindet und mit Level-0 bezeichnet ist. Der erste Teilbereich umfasst zwei Zugänge 19 zur Schaltanlage, Zuluftschächte 4 und einen Zugangs- bzw. Transportschacht 1, der geeignet ist, alle großen Gerätschaften und Betriebsmittel, insbesondere Leistungs- und Hilfstransformatoren, Hochspannungsschaltanlage und Mittelspannungsschaltanlage sowie Kühl- und Klimageräte, in die verschiedenen Geschosse der Station zu transportieren. In einer vorteilhaften Ausführungsform kann der oberirdische Teilbereich der Station beispielsweise durch öffentlich zugängliche Räume überbaut bzw. in diese eingebunden werden, um so, insbesondere in städtischen Gebieten, keine zusätzlichen Bodenflächen zu verbrauchen.

Auch ist vorgesehen, den Zugangs- bzw. Transportschacht 1 während des Betriebes der Station als Abluftschacht 16 zu nutzen. Hierzu weist der Abluftschacht 16 entsprechende Abluftkanäle 3 auf, die eine vorteilhafte Luftführung gewährleisten sowie den baulichen Abschluss des Schachtes 1 darstellen.

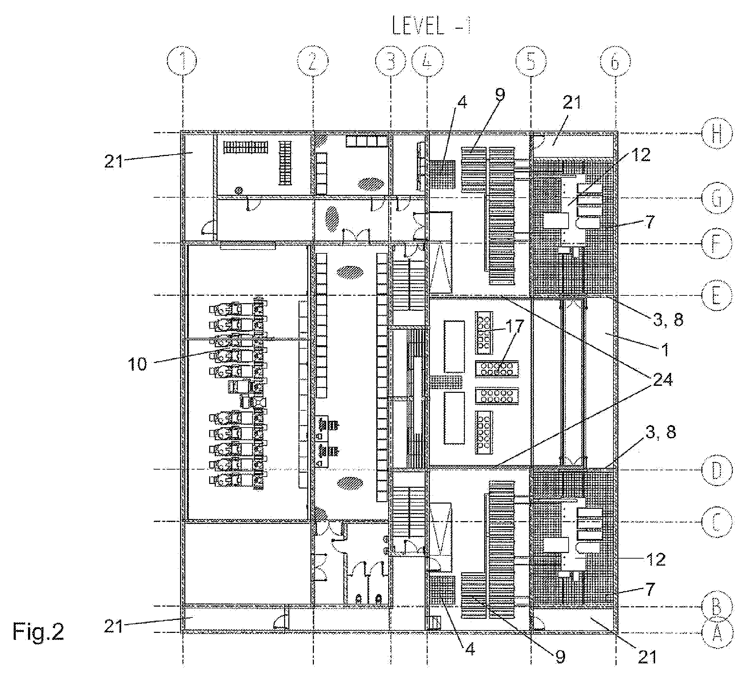

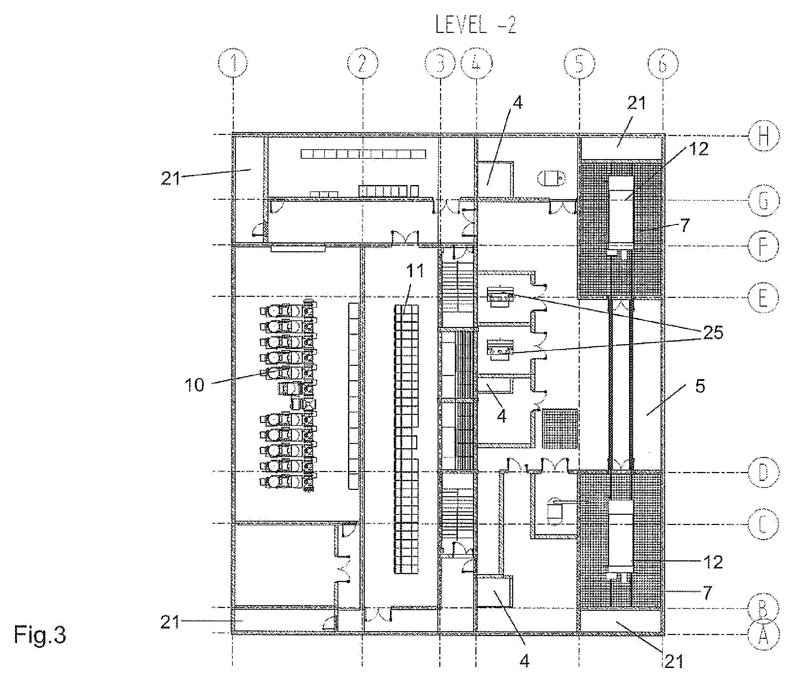

**Figur 2** zeigt einen beispielhaften Grundriss eines ersten unterirdisch angeordneten Geschosses der Station, dass mit Level-1 bezeichnet ist. Im Level-1 sind neben dem Zugangs- bzw. Transportschacht 1 ein Teil der Hochspannungsschaltanlage 10 und zwei Leistungstransformatoren 12 angeordnet. Die Transformatoren 12 sind in dafür vorgesehene Boxen 7 verbracht, deren Anordnung so gestaltet ist, dass ein direkter Zugang zu jedem Transformator 12 gewährleistet ist. Da sich die Hochspannungsschaltanlage 10, die Boxen 7 zur Aufnahme der Transformatoren 12 und die Leistungstransformatoren 12 über zwei Geschosse erstrecken, sind diese nochmals in der Figur 3 gezeigt.

Die für die Kühlung der Transformatoren 12 vorzusehenden Kühler 9 sind von dem mit Öl gefüllten Körper der Transformatoren 12 abgesetzt und außerhalb der Transformatorbox 7 angeordnet, was eine Minimierung der Lüftungsöffnungen 8 der eigentlichen Transformatorbox 7 erlaubt. Die Ausführung der Lüftungsöffnungen 8 ermöglicht ein automatisches Schließen der Lüftungsöffnungen 8 im Brand- bzw. Havariefall. Die Kühler 9 der Transformatoren 12 sind weiterhin so angeordnet, dass im Brand- bzw. Havariefall der betroffene Kühlerbereich mit den entsprechenden Kühlgeräten 9 für den jeweiligen Transformators 12 mittels Brandschutztüren 24 automatisch von der restlichen Station bzw. dem restlichen Kühlerbereich der nicht betroffenen Transformatoren 12 abtrennbar ist.

Der Zuluftschacht 4, welcher in vorteilhafter Weise redundant ausgeführt ist, versorgt die komplette Station über seine Verbindung zum oberirdischen Bereich der Schaltanlage mit Frischluft.

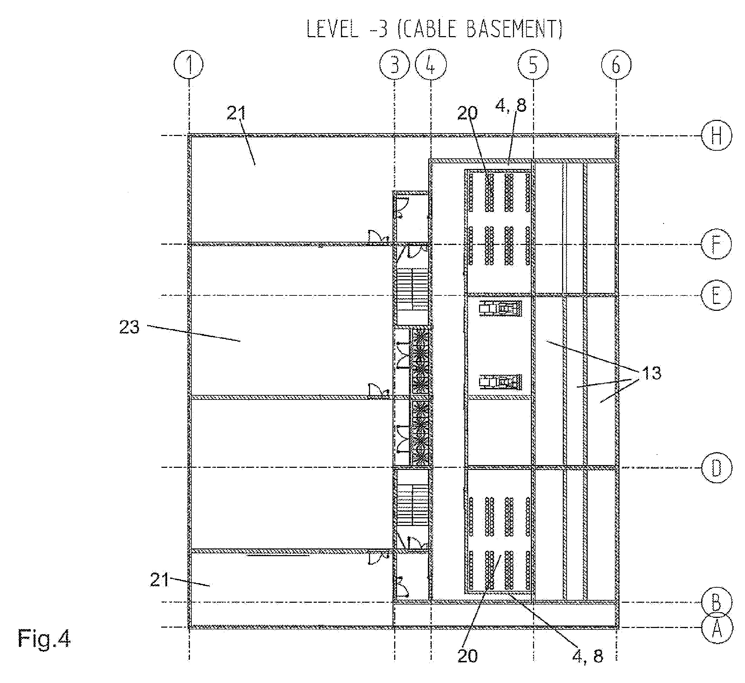

Um eine flexible Zuführung der Leistungskabel von außen in die Station zu gewährleisten, sind Kabelschächte 21 an allen Ecken der Station vorgesehen. Die Leistungskabel werden mittels der Kabelschächte 21 über einen tiefer liegenden in Figur 4 dargestellten Kabelkeller 23 den Schaltanlagen 10, 11 zugeführt.

In **Figur 3** ist ein beispielhafter Grundriss eines zweiten unterirdisch angeordneten Geschosses der Station gezeigt, das unterhalb des ersten unterirdisch angeordneten Geschosses der Station angeordnet ist und mit Level-2 bezeichnet ist. Im Level-2 sind neben den aus dem Level-1 herausgeführten Kabelschächten 21, den von den Boxen 7 aufgenommenen Leistungstransformatoren 12, der Hochspannungsschaltanlage 10 und den Zuluftschächten 4 zwei Hilfstransformatoren 25 und eine Mittelspannungsschaltanlage 11 untergebracht.

Weiterhin zeigt Figur 3 eine Bodenfläche 5, die sich unterhalb des Zugangsschachtes 1 befindet und zum Absetzen und/oder Zwischenlagern von Betriebsmitteln, insbesondere der Leistungstransformatoren 12, nach dem Einbringen durch den Schacht 1 vorgesehen ist. Der Raum über der Bodenfläche 5 ist mit einer nicht dargestellten Hebeeinrichtung ausgestattet, die zum Heben und Senken der Betriebsmittel, insbesondere der Leistungstransformatoren 12, verwendbar ist.

**Figur 4** zeigt einen beispielhaften Grundriss eines dritten unterirdisch angeordneten Geschosses der Station, der mit Level-3 bezeichnet ist. Im Level-3 sind unter den Transformatoren 12 Ölwannen 13 vorgesehen, die im Havariefall auslaufendes Transformatorenöl aus den Transformatoren 12 aufnehmen. Die Transformatoren 12 sind weiterhin mit einer automatischen Löscheinrichtung 20 ausgestattet, deren Löschmittel vorzugsweise ebenfalls im Level-3 gelagert sind.

Auch ein Kabelkeller 23 und die damit verbundenen Kabelschächte 21 sind im Level-3 untergebracht. Die in der Station verlegten Leistungskabel sind mittels der Kabelschächte 21 vom im Level-3 befindlichen Kabelkeller 23 den Schaltanlagen 10, 11 zugeführt.

Im Lüftungsbereich über dem Lüftungsschacht 4 und den Zuluftkanälen 4 sind die ebenfalls benötigten Klimageräte 17 angeordnet.

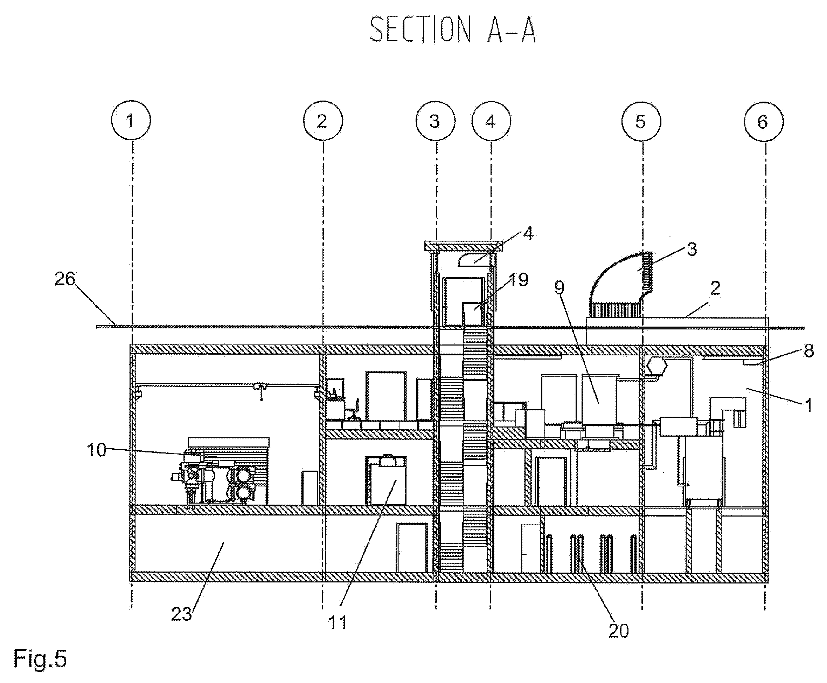

Die **Figuren 5** bis 10 zeigen verschiedene Schnittansichten gemäß den Schnittlinien A-A, B-B, C-C, D-D, E-E und F-F aus den Figuren 1 bis 4, wobei in den Schnittansichten eingezeichnete Bezugszeichen aus den Figuren 1 bis 4 übernommen wurden.

### Bezugszeichenliste

- 1: Zugangs- bzw. Transportschacht
- 2: Verschlusselement
- 3: Abluftkanal
- 4: Lüftungsschacht, Zuluftschacht, Zuluftkanal
- 5: Bodenfläche zum Absetzen von Betriebsmittel
- 7: Boxen zur Aufnahme der Transformatoren
- 8: Lüftungsöffnungen der Boxen
- 9: Kühler für die Transformatoren
- 10: Hochspannungsschaltanlage
- 11: Mittelspannungsschaltanlage
- 12: Leistungstransformatoren
- 13: Ölwannen
- 16: Abluftschacht
- 17: Klimageräte
- 19: Zugang zur Station
- 20: zentrale Löscheinrichtung
- 21: Kabelschacht
- 23: Kabelkeller
- 24: Brandschutztür
- 25: Hilfstransformator
- 26: Oberkante Gelände, Geländekante

## Patentansprüche

1. Umspannstation für Hoch- und Mittelspannungen, welche unterhalb der Erdoberfläche installiert ist und bei der wenigstens ein Zugang (19) zur Schaltanlage und Lüftungsschächte oberirdisch angeordnet sind, umfassend:
• Leistungstransformatoren (12) zur Umsetzung von Hochspannung auf Mittelspannung,
• wenigstens eine Mittelspannungsschaltanlage (11) sowie Hilfs- und Neben- sowie Schutz- und Steuerungseinrichtungen,
• einen Zugangs- bzw. Transportschacht (1), der geeignet ist, zu installierende Betriebsmittel in die Station zu transportieren, und der ein bewegliches Verschlusselement (2) aufweist, wobei
• unterhalb des Zugangs- bzw. Transportschachtes (1) eine Bodenfläche (5) zum Absetzen der Betriebsmittel und der Transformatoren (12) vorgesehen ist,
**dadurch gekennzeichnet, dass**
• der Zugangs- bzw. Transportschacht (1) eine gemeinsame Transportöffnung für den Transport der Transformatoren in die Umspannstation aufweist und dazu geeignet ist, als Abluftschacht (16) genutzt zu werden, wozu er Lüftungskanäle (3) aufweist, die einerseits eine Luftführung gewährleisten sowie andererseits den baulichen Abschluss des Schachtes darstellen,
• die Transformatoren (12) nach dem Absetzen auf der Bodenfläche (5) in dafür vorgesehene verschließbare Boxen (7) verbringbar sind, und
• für die Transformatoren (12) vorzusehende Kühler (9) vom eigentlichen Transformatorentank (13) abgesetzt und außerhalb der Transformatorboxen (7) angeordnet sind.

2. Umspannstation nach Anspruch 1, **dadurch gekennzeichnet, dass** das Verschlusselement (2) bei Bedarf demontierbar ist.

3. Umspannstation nach Anspruch 1 oder 2, **dadurch gekennzeichnet, dass** im Zugangs- bzw. Transportschacht (1) eine Öffnung vorgesehen ist, über welche ein Ölaustausch oder eine Ölaufbereitung des Transformators (12) ausführbar ist.

4. Umspannstation nach einem der vorherigen Ansprüche, **dadurch gekennzeichnet, dass** die Bodenfläche (5) zum Absetzen der Betriebsmittel eine bewegliche Plattform aufweist.

5. Umspannstation nach einem der vorherigen Ansprüche, **dadurch gekennzeichnet, dass** die Station komplett überbaubar ist und über einen in der Überbauung integrierten Großraum ein Zugang zum Zugangs- bzw. Transportschacht (1) vorgesehen ist.

6. Umspannstation nach Anspruch 5, **dadurch gekennzeichnet, dass** die Überbauung als öffentlicher Bereich nutzbar ist.

7. Umspannstation nach einem der vorherigen Ansprüche, **dadurch gekennzeichnet, dass** wenigstens ein gemeinsamer Zuluftschacht (4) vorgesehen ist, der die Station mit Frischluft versorgt.

8. Umspannstation nach Anspruch 7, **dadurch gekennzeichnet, dass** die in der Station benötigten Ventilatoren, Sandfilter und/oder Dämpfungseinrichtungen innerhalb des Zuluftschachtes (4) so angeordnet sind, dass mittels vorgesehener Türen eine Wartung innerhalb der Station durchführbar ist.

9. Umspannstation nach einem der vorherigen Ansprüche, **dadurch gekennzeichnet, dass** die Transformatoren (12) in mit Fertigteilelementen verschlossenen Boxen (7) angeordnet sind, wobei die Fertigteilelemente so ausgeführt sind, dass die notwendigen Brandschutzanforderungen eingehalten werden.

10. Umspannstation nach einem der vorherigen Ansprüche, **dadurch gekennzeichnet, dass** die Transformatorboxen (7) mit einer automatischen Löscheinrichtung (20) ausgestattet sind.

11. Umspannstation nach einem der vorherigen Ansprüche, **dadurch gekennzeichnet, dass** ein im Brand- bzw. Havariefall betroffener Kühlerbereich der Station mittels Brandschutztüren (24) automatisch von der restlichen Station bzw. dem restlichen Kühlerbereich abtrennbar ist, um so einen Weiterbetrieb der Station zu gewährleisten.

12. Umspannstation nach einem der vorherigen Ansprüche, **dadurch gekennzeichnet, dass** wenigstens eine Druckentlastungseinrichtung vorgesehen ist, deren Druckentlastungskanäle in den Kabelkeller (23) der Station geführt sind.

13. Umspannstation nach einem der vorherigen Ansprüche, **dadurch gekennzeichnet, dass** in der Umspannstation auch eine Hochspannungsschaltanlage (10) vorgesehen ist.

## Claims

1. Transformer station for high and medium voltages which is installed beneath the earth's surface and in which at least one access point (19) to the switchgear assembly and ventilation shafts are arranged above-ground, comprising:
• power transformers (12) for converting high voltage into medium voltage,
• at least one medium-voltage switchgear assembly (11) and also auxiliary and secondary and also protection and control devices,
• an access and transportation shaft (1) which is suitable for transporting operating means which are to be installed to the station, and which has a moving closure element (2), wherein
• a base surface (5) for holding the operating means and the transformers (12) is provided beneath the access and transportation shaft (1) ,
**characterized in that**
• the access and transportation shaft (1) has a common transportation opening for transporting the transformers to the transformer station and is suitable to be used as an exhaust-air shaft (16), for which purpose it has ventilation ducts (3) which firstly ensure air guidance and second constitute the physical termination of the shaft,
• the transformers (12), after being placed on the base surface (5), can be moved into boxes (7) which are provided for this purpose and can be closed, and
• radiators (9) which have to be provided for the transformers (12) are removed from the actual transformer tank (13) and arranged outside the transformer boxes (7).

2. Transformer station according to Claim 1, **characterized in that** the closure element (2) can be removed as required.

3. Transformer station according to Claim 1 or 2, **characterized in that** an opening is provided in the access and transportation shaft (1), it being possible for oil to be exchanged or treated in the transformers (12) via said opening.

4. Transformer station according to one of the preceding claims, **characterized in that** the base surface (5) for positioning the operating means has a moving platform.

5. Transformer station according to one of the preceding claims, **characterized in that** a structure can be built over the entire station and access to the access and transportation shaft (1) is provided by means of a large space which is integrated in said structure.

6. Transformer station according to Claim 5, **characterized in that** the structure which is built over said station can be used as a public area.

7. Transformer station according to one of the preceding claims, **characterized in that** at least one common feed-air shaft (4) is provided, said feed-air shaft supplying fresh air to the station.

8. Transformer station according to Claim 7, **characterized in that** the fans, sand filters and/or damping devices which are required in the station are arranged within the feed-air shaft (4) such that servicing can be carried out within the station by means of designated doors.

9. Transformer station according to one of the preceding claims, **characterized in that** the transformers (12) are arranged in boxes (7) which are closed by prefabricated components, wherein the prefabricated components are designed such that the necessary fire-protection requirements are complied with.

10. Transformer station according to one of the preceding claims, **characterized in that** the transformer boxes (7) are equipped with an automatic extinguishing device (20).

11. Transformer station according to one of the preceding claims, **characterized in that** a radiator region of the station which is affected by fire or is damaged can be automatically separated from the rest of the station or the rest of the radiator region by means of fire-protection doors (24) in order to thus ensure that the station can continue to operate.

12. Transformer station according to one of the preceding claims, **characterized in that** at least one pressure-relief device is provided, the pressure-relief ducts of said pressure-relief device being routed into the cable vault (23) of the station.

13. Transformer station according to one of the preceding claims, **characterized in that** a high-voltage switchgear assembly (10) is also provided in the transformer station.

## Revendications

1. Poste de transformation pour hautes et moyennes tensions, installé de manière souterraine et dans lequel au moins un accès (19) à une installation de commutation et à une gaine de ventilation est disposé en surface, comprenant .
• des transformateurs de puissance (12) pour convertir une haute tension en une moyenne tension,
• au moins une installation de commutation à moyenne tension (11) ainsi que des dispositifs d'assistance, auxiliaires, de protection et de commande,
• un puits d'accès ou de transport (1) qui est approprié pour transporter des équipements à installer dans le poste et qui comporte un élément de fermeture (2) mobile, dans lequel
• une surface inférieure (5) est prévue pour déposer les équipements et les transformateurs (12) en dessous du puits d'accès ou de transport (1),
**caractérisé en ce que**
• le puits d'accès ou de transport (1) comporte une ouverture de transport commune destinée au transport des transformateurs dans le poste de transformation et est approprié pour être utilisé en tant que puits d'évacuation d'air (16), ce pour quoi il comporte des canaux d'aération (3) qui, d'une part, assurent un acheminement de l'air et d'autre part, constituent un dispositif de fermeture structurel du puits,
• les transformateurs (12) peuvent être mis en place sur la surface inférieure (5) dans des boîtiers (7) prévus à cet effet pouvant être fermés après qu'ils ont été déposés, et
• des refroidisseurs (9) devant être prévus pour les transformateurs (12) sont déposés à partir d'une cuve de transformateurs (13) proprement dite et sont disposés à l'extérieur des boîtiers de transformateurs (7).

2. Poste de transformation selon la revendication 1, **caractérisé en ce que** l'élément de fermeture (2) peut si besoin être démonté.

3. Poste de transformation selon la revendication 1 ou 2, **caractérisé en ce qu'**il est prévu dans le puits d'accès ou de transport (1) une ouverture par l'intermédiaire de laquelle il est possible d'effectuer un échange d'huile ou une préparation d'huile du transformateur (12).

4. Poste de transformation selon l'une quelconque des revendications précédentes, **caractérisé en ce que** la surface inférieure (5) comporte une plateforme mobile pour déposer les équipements.

5. Poste de transformation selon l'une quelconque des revendications précédentes, **caractérisé en ce que** le poste peut être entièrement surmonté d'une superstructure et **en ce qu'**il est prévu sur une région intégrée à la superstructure un accès au puits d'accès ou de transport (1).

6. Poste de transformation selon la revendication 5, **caractérisé en ce que** la superstructure peut être utilisée en tant qu'espace public.

7. Poste de transformation selon l'une quelconque des revendications précédentes, **caractérisé en ce qu'**il est prévu au moins un puits d'aération commun (4) qui alimente le poste en air frais.

8. Poste de transformation selon la revendication 7, **caractérisé en ce que** les ventilateurs, les filtres à sable et/ou les dispositifs d'amortissement nécessaires dans le poste sont disposés à l'intérieur du puits d'aération (4) de manière à ce qu'une surveillance puisse être effectuée à l'intérieur du poste au moyen de portes prévues à cet effet.

9. Poste de transformation selon l'une quelconque des revendications précédentes, **caractérisé en ce que** les transformateurs (12) sont disposés dans des boîtiers (7) fermés par des éléments préfabriqués, dans lequel les éléments préfabriqués sont réalisés de manière à respecter les exigences de sécurité incendie nécessaires.

10. Poste de transformation selon l'une quelconque des revendications précédentes, **caractérisé en ce que** les boîtiers de transformateur (7) sont munis d'un dispositif d'extinction automatique (20).

11. Poste de transformation selon l'une quelconque des revendications précédentes, **caractérisé en ce qu'**une zone de refroidissement affectée en cas d'incendie ou d'avarie du poste peut être séparée automatiquement au moyen de portes de sécurité incendie (24) du reste du poste ou du reste de la zone de refroidissement afin de garantir la poursuite du fonctionnement du poste.

12. Poste de transformation selon l'une quelconque des revendications précédentes, **caractérisé en ce qu'**il est prévu au moins un dispositif de décharge de pression dont les canaux de décharge de pression sont amenés à passer dans un faux plancher (23) du poste.

13. Poste de transformation selon l'une quelconque des revendications précédentes, **caractérisé en ce qu'**une installation de commutation à haute tension (10) est également prévue dans le poste de transformation.
